# EUROPEAN PATENT APPLICATION

(11) **EP 4 566 860 A1**
(43) Date of publication of application: **11.06.2025**
(21) Application number: 24217787.1
(22) Date of filing: 05.12.2024
(51) Int. Cl.: B60K 1/04

(54) **BATTERY MOUNTING STRUCTURE IN FRAME VEHICLE**

(30) Priority: 06.12.2023 JP 2023206486
(71) Applicant: TOYOTA JIDOSHA KABUSHIKI KAISHA, Aichi-ken, 471-8571 (JP)
(72) Inventor: URAKAWA, Kazushi, TOYOTA-SHI, AICHI-KEN, 471-8571 (JP); IMAI, Yohsuke, TOYOTA-SHI, AICHI-KEN, 471-8571 (JP); CHIHARA, Koji, TOYOTA-SHI, AICHI-KEN, 471-8571 (JP)
(74) Representative: Cabinet Beau de Loménie

(57) **Abstract**

A battery mounting structure (10) in a frame vehicle (12) includes: a vehicle body frame (20) including a pair of right and left side rails (14) extending in a vehicle front and rear direction, a first cross member (24) coupling vehicle front-side parts of the side rails (14) in a vehicle width direction, and a second cross member (26) coupling vehicle rear-side parts of the side rails (14) in the vehicle width direction; a sub-frame (30) including a first frame (32) extending in the vehicle front and rear direction at a central part of the vehicle body frame (20) in the vehicle width direction and a second frame (34) extending in the vehicle width direction at a central part of the first frame (32) in the vehicle front and rear direction, the sub-frame (30) being provided between the first cross member (24) and the second cross member (26); and a battery pack (40) supported on the sub-frame (30) from a vehicle lower side.

## Description

### BACKGROUND OF THE INVENTION

### 1. Field of the Invention

The invention relates to a battery mounting structure in a frame vehicle.

### 2. Description of Related Art

A vehicle body structure of an electrified vehicle in which a plurality of cross members extending in a vehicle width direction is spanned between a pair of right and left frames extending in a front and rear direction and a battery pack is disposed on an upper side of the plurality of cross members is generally known (see, for example, Japanese Unexamined Patent Application Publication No. 2018-144700 (JP 2018-144700 A)).

### SUMMARY OF THE INVENTION

Incidentally, a frame vehicle ensures steering stability while driving on a rough road, by a twist of a vehicle body frame that is a vehicle body framework. For this reason, if a battery pack in which a plurality of battery cells is arranged in the front and rear direction is accommodated in a case is mounted on such a frame vehicle, the plurality of battery cells may move like a wave or the case may be damaged due to a twist of the vehicle body frame. In other words, the battery pack may get broken.

On the other hand, if the stiffness of the vehicle body frame is improved by providing the vehicle body frame with a reinforcement member to avoid breakage of the battery pack (to protect the battery pack), the vehicle body frame is difficult to twist, with the result that steering stability while driving on a rough road decreases. In this way, there is still room for improvement in a structure for ensuring steering stability and also protecting a battery pack while driving on a rough road in a frame vehicle.

The invention provides a battery mounting structure in a frame vehicle, which ensures steering stability and also protects a battery pack while the frame vehicle is driving on a rough road.

A first aspect of the invention provides a battery mounting structure in a frame vehicle. The battery mounting structure includes: a vehicle body frame including a pair of right and left side rails extending in a vehicle front and rear direction, a first cross member coupling vehicle front-side parts of the side rails in a vehicle width direction, and a second cross member coupling vehicle rear-side parts of the side rails in the vehicle width direction; a sub-frame including a first frame extending in the vehicle front and rear direction at a central part of the vehicle body frame in the vehicle width direction and a second frame extending in the vehicle width direction at a central part of the first frame in the vehicle front and rear direction, the sub-frame being provided between the first cross member and the second cross member; and a battery pack supported on the sub-frame from a vehicle lower side.

According the first aspect, the sub-frame including the first frame extending in the vehicle front and rear direction at the central part of the vehicle body frame in the vehicle width direction and the second frame extending in the vehicle width direction at the central part of the first frame in the vehicle front and rear direction is provided between the first cross member and the second cross member of the vehicle body frame. The battery pack is supported on the sub-frame from the vehicle lower side.

Here, a space between the first cross member and the second cross member of the vehicle body frame is an area where a displacement due to a twist is extremely small. Therefore, when the sub-frame is provided in that area and the battery pack is supported by the sub-frame, concerns about breakage of the battery pack are reduced even when the vehicle body frame twists while, for example, the frame vehicle is driving on a rough road. In other words, according to the first aspect of the invention, steering stability is ensured and also the battery pack is protected while the frame vehicle is driving on a rough road. The "central part in the vehicle front and rear direction" in the first aspect of the invention also includes a "substantially central part in the vehicle front and rear direction" slightly shifted in the vehicle front and rear direction from the central part in the vehicle front and rear direction.

In a battery mounting structure in a frame vehicle according to a second aspect of the invention, in addition to the battery mounting structure in a frame vehicle according to the first aspect, the sub-frame may include a first coupling portion provided at a vehicle front-side end of the first frame and extending in the vehicle width direction, and a second coupling portion provided at a vehicle rear-side end of the first frame and extending in the vehicle width direction, and outer ends of the first coupling portion in the vehicle width direction and outer ends of the second frame in the vehicle width direction may be respectively joined to the side rails, and outer ends of the second coupling portion in the vehicle width direction may be joined to the second cross member.

According to the second aspect, the sub-frame includes the first coupling portion provided at the vehicle front-side end of the first frame and extending in the vehicle width direction and the second coupling portion provided at the vehicle rear-side end of the first frame and extending in the vehicle width direction. The outer ends of the first coupling portion in the vehicle width direction and the outer ends of the second frame in the vehicle width direction are respectively joined to the side rails, and the outer ends of the second coupling portion in the vehicle width direction are joined to the second cross member. Therefore, the battery pack that is a heavy load is stably supported by the sub-frame.

In a battery mounting structure in a frame vehicle according to a third aspect of the invention, in addition to the battery mounting structure in a frame vehicle according to the second aspect, the battery pack may be joined to the first frame, the second frame, an inner part of the first coupling portion in the vehicle width direction, and an inner part of the second coupling portion in the vehicle width direction.

According to the third aspect, the battery pack is joined to the first frame, the second frame, the inner part of the first coupling portion in the vehicle width direction, and the inner part of the second coupling portion in the vehicle width direction. Here, joint portions of the battery pack with the first frame, the second frame, the inner part of the first coupling portion in the vehicle width direction, and the inner part of the second coupling portion in the vehicle width direction are portions in the area in which a displacement due to a twist is extremely small. Therefore, even when the vehicle body frame twists, concerns about breakage of the battery pack are further reduced, and protection performance for the battery pack is improved.

In a battery mounting structure in a frame vehicle according to a fourth aspect of the invention, in addition to the battery mounting structure in a frame vehicle according to any one of the first to third aspects, the sub-frame may be provided on a vehicle upper side of the vehicle body frame.

According to the fourth aspect, the sub-frame is provided on the vehicle upper side of the vehicle body frame. Therefore, the battery pack is significantly spaced apart from a road surface, so protection performance for the battery pack is improved.

In a battery mounting structure in a frame vehicle according to a fifth aspect of the invention, in addition to the battery mounting structure in a frame vehicle according to any one of the first to third aspects, the sub-frame may be provided at an intermediate part of the vehicle body frame in a vehicle up and down direction.

According to the fifth aspect, the sub-frame is provided at the intermediate part of the vehicle body frame in the vehicle up and down direction. Therefore, a vehicle cabin space increases, and the battery pack is spaced apart from a road surface, so protection performance for the battery pack is improved.

In a battery mounting structure in a frame vehicle according to a sixth aspect of the invention, in addition to the battery mounting structure in a frame vehicle according to any one of the first to third aspects, the sub-frame may be provided on a vehicle lower side of the vehicle body frame.

According to the sixth aspect, the sub-frame is provided on the vehicle lower side of the vehicle body frame. Therefore, the battery pack is disposed on an inner side of the vehicle body frame. Thus, mounting stability of the battery pack is improved, and protection performance for the battery pack in the event of a collision of the frame vehicle is improved.

In a battery mounting structure in a frame vehicle according to a seventh aspect of the invention, in addition to the battery mounting structure in a frame vehicle according to any one of the first to sixth aspects, the first frame may be higher in stiffness than the second frame.

According to the seventh aspect, the first frame is higher in stiffness than the second frame. Therefore, even when the vehicle body frame twists while, for example, the frame vehicle is driving on a rough road, movement like a wave of a plurality of battery cells accommodated in the battery pack so as to be arranged in the vehicle front and rear direction is reduced.

In a battery mounting structure in a frame vehicle according to an eighth aspect of the invention, in addition to the battery mounting structure in a frame vehicle according to any one of the second to sixth aspects, at least the first frame and the second frame of the sub-frame may be integrally formed.

According to the eighth aspect, at least the first frame and the second frame of the sub-frame are integrally formed. Therefore, in comparison with a case where the first frame and the second frame are not integrally formed, formability of the sub-frame is improved, and the number of components is reduced.

As described above, according to the aspects of the invention, it is possible to ensure steering stability and also protect the battery pack while the frame vehicle is driving on a rough road.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic plan view of a battery mounting structure in a frame vehicle according to an embodiment;
FIG. 2 is a schematic side view of the battery mounting structure in the frame vehicle according to the embodiment;
FIG. 3 is a schematic perspective view of a sub-frame that is a component of the battery mounting structure in the frame vehicle according to the embodiment;
FIG. 4 is a schematic enlarged plan view of fastening points of the sub-frame that is a component of the battery mounting structure in the frame vehicle according to the embodiment;
FIG. 5 is a schematic plan view of the internal structure of a battery pack supported by the battery mounting structure in the frame vehicle according to the embodiment;
FIG. 6 is a graph that shows a twist displacement of the battery pack, caused by the battery mounting structure in the frame vehicle according to the embodiment;
FIG. 7 is a schematic side view of a battery mounting structure in a frame vehicle according to a first modification of the embodiment; and
FIG. 8 is a schematic side view of a battery mounting structure in a frame vehicle according to a second modification of the embodiment.

### DETAILED DESCRIPTION OF EMBODIMENTS

An embodiment according to the invention will be described in detail with reference to the accompanying drawings. For the sake of convenience of description, the arrow UP indicates a vehicle upward direction, the arrow FR indicates a vehicle forward direction, and the arrow RH indicates a direction to a vehicle right-hand side, shown as needed in the drawings. In the following description, when upper and lower, front and rear, and right and left directions are mentioned unless otherwise specified, these are assumed to indicate upper and lower sides in a vehicle up and down direction, front and rear sides in a vehicle front and rear direction, and right and left sides in a vehicle right and left direction (vehicle width direction).

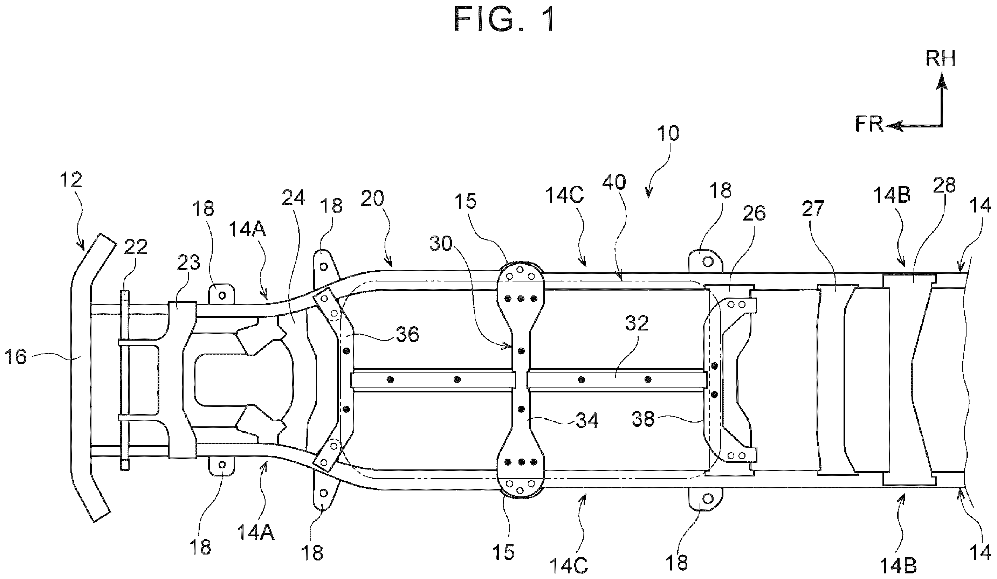

As shown in FIG. 1, a frame vehicle 12 including a battery mounting structure 10 according to the present embodiment is mainly a battery electric vehicle (BEV) or a fuel cell electric vehicle (FCEV). The frame vehicle 12 includes a pair of right and left side rails 14 disposed on both sides in the vehicle width direction and extending in the front and rear direction. Each of the side rails 14 is formed in a closed cross-sectional shape in a cross section taken along the vehicle width direction. A front wheel (not shown) and a rear wheel (not shown) are respectively disposed on an outer side of a front part 14A and an outer side of a rear part 14B of each of the side rails 14 in the vehicle width direction.

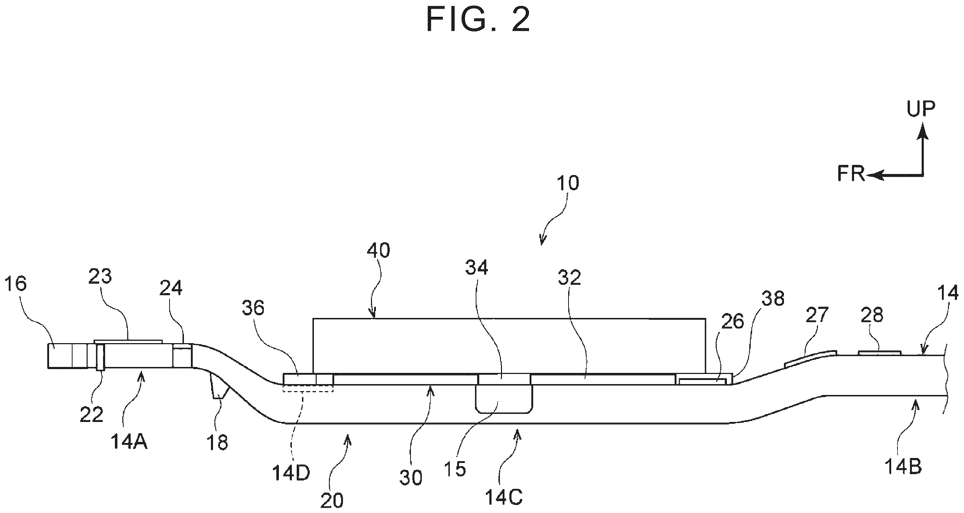

As shown in FIG. 2, suspension units and the like (not shown) are disposed on a lower side of the front part 14A and a lower side of the rear part 14B of each of the side rails 14, so, in a side view in the vehicle width direction, the front part 14A and the rear part 14B of each of the side rails 14 are disposed on an upper side with respect to a central part 14C of the side rail 14. In other words, the front part 14A and the rear part 14B of each of the side rails 14 respectively have inclined parts respectively inclined from the central part 14C toward a front upper side and a rear upper side and respectively extend from the inclined parts toward a front side and a rear side.

A front bumper reinforcement 16 extending along substantially the vehicle width direction is spanned at front ends of the side rails 14 (see also FIG. 1). A rear bumper reinforcement (not shown) extending along substantially the vehicle width direction is spanned at rear ends of the side rails 14. Energy absorbing members, such as crush boxes (not shown), may be respectively provided between the front bumper reinforcement 16 and the front end of each of the side rails 14 and between the rear bumper reinforcement and the rear end of each of the side rails 14.

As shown in FIG. 1, a plurality of cross members extending in the vehicle width direction is spanned between the side rails 14 between the front bumper reinforcement 16 and the rear bumper reinforcement. More specifically, cross members 22, 23, 24 coupling the front parts 14A of the side rails 14 to each other are spanned at the front parts 14A, and three cross members 26, 27, 28 coupling the rear parts 14B of the side rails 14 to each other are spanned at the rear parts 14B.

The cross members 22, 23, 24 and the cross members 26, 27, 28 each are formed in a closed cross-sectional shape or a substantially inverted U-shape of which the lower side is open, in a cross section taken along the front and rear direction. The ladder vehicle body frame 20 is made up of the cross members 22, 23, 24, the cross members 26, 27, 28, and the side rails 14.

In the following description, of the cross members 22, 23, 24 coupling the front parts 14A of the side rails 14 to each other, the rearmost cross member 24 is referred to as "first cross member 24", and, of the three cross members 26, 27, 28 coupling the rear parts 14B of the side rails 14 to each other, the frontmost cross member 26 is referred to as "second cross member 26".

The first cross member 24 and the cross member 23 on the front side of the first cross member 24 will support a front wheel motor (not shown) via a motor mount. The second cross member 26 and the cross member 27 on the rear side of the cross member 26 will support a rear wheel motor (not shown) via a motor mount. A cab (body) (not shown) will be attached to each of the side rails 14, and a plurality of connecting portions 18 therefor is provided on an outer surface of each of the side rails 14.

In the frame vehicle 12 including the vehicle body frame 20 as described above, the battery pack 40 will be mounted at a central part (between front and rear axles) of the vehicle body frame 20 in the front and rear direction. Next, the battery mounting structure 10 that supports the battery pack 40 will be described in detail. In FIG. 2, and FIG. 7 and FIG. 8 (described later), the connecting portions 18 at the central part 14C and the rear part 14B of the side rail 14 and fasteners, for example, bolts, are not shown.

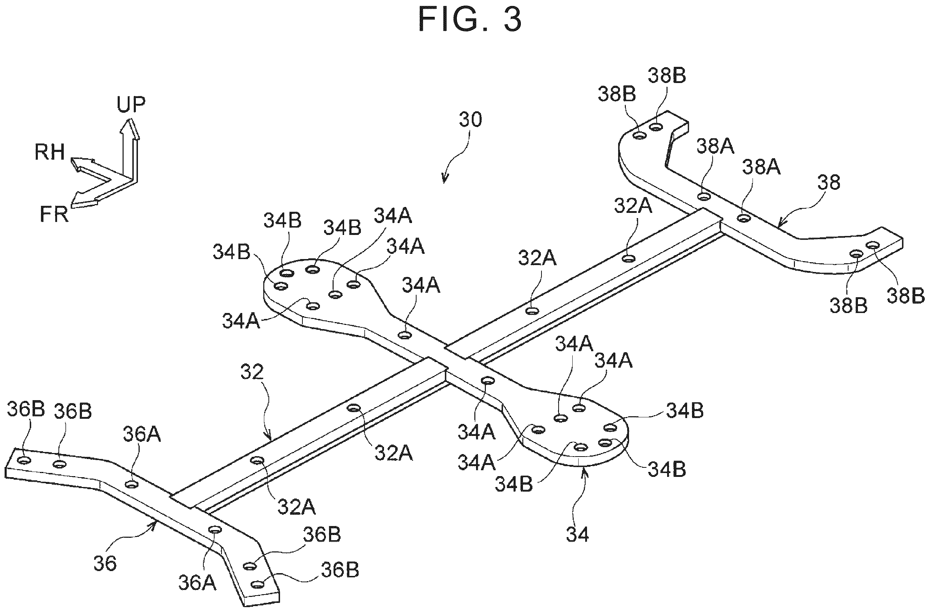

As shown in FIG. 1 and FIG. 2, a sub-frame 30 made of high-tensile steel or the like is provided on the upper side of the vehicle body frame 20 between the first cross member 24 and the second cross member 26. As shown in FIG. 3, the sub-frame 30 includes a first frame 32 extending in the front and rear direction at the central part of the vehicle body frame 20 in the vehicle width direction and a second frame 34 extending in the vehicle width direction at substantially the central part of the first frame 32 in the front and rear direction.

In other words, the first frame 32 and the second frame 34 of the sub-frame 30 are formed in substantially a cross shape in a plan view, and the first frame 32 and the second frame 34 are integrally joined to each other by welding or the like. The first frame 32 is configured to be higher in stiffness than the second frame 34. Specifically, for example, the first frame 32 is formed to be thicker in thickness than the second frame 34 and formed in a hat shape in cross section.

As shown in FIG. 1 and FIG. 3, the sub-frame 30 includes a first coupling portion 36 extending in substantially the vehicle width direction and a second coupling portion 38 extending in substantially the vehicle width direction. The first coupling portion 36 is provided such that a central part of the first coupling portion 36 in the vehicle width direction is integrally joined by welding or the like to a front end (front-side end) of the first frame 32. The second coupling portion 38 is provided such that a central part of the second coupling portion 38 in the vehicle width direction is integrally joined by welding or the like to a rear end (rear-side end) of the first frame 32.

The first coupling portion 36 is formed in substantially a curved shape that is convex toward the rear side in a plan view. More specifically, the first coupling portion 36 is formed in such a shape that the first coupling portion 36 is linearly extended by a predetermined length outward in the vehicle width direction from the central part in the vehicle width direction and then linearly extended by a predetermined length forward and outward in the vehicle width direction from outer ends of the linearly extended part in the vehicle width direction.

Similarly, the second coupling portion 38 is formed in substantially a curved shape that is convex toward the front side in a plan view. More specifically, the second coupling portion 38 is formed in such a shape (substantially a C shape in a plan view) that the second coupling portion 38 is linearly extended by a predetermined length outward in the vehicle width direction from the central part in the vehicle width direction, linearly extended by a predetermined length rearward and outward in the vehicle width direction from outer ends of the linearly extended part in the vehicle width direction, and linearly extended by a predetermined length rearward from outer ends of the linearly extended parts in the vehicle width direction.

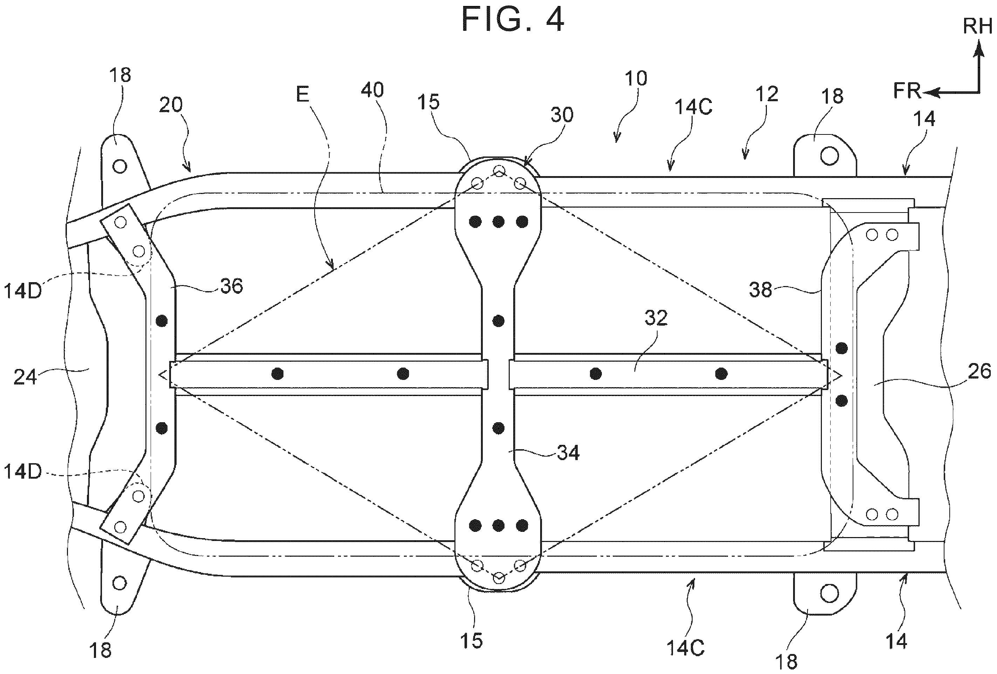

As indicated by the outline circle marks in FIG. 1 and FIG. 4, the outer ends of the first coupling portion 36 in the vehicle width direction each are fastened (joined) to an upper surface of the front part 14A of a corresponding one of the side rails 14 and an upper surface of a flange 14D projecting inward from the upper surface in the vehicle width direction by fasteners, for example, two bolts in total, from the upper side. The outer ends of the second coupling portion 38 in the vehicle width direction each are fastened (joined) to an outer end on an upper surface of the second cross member 26 in the vehicle width direction by fasteners, for example, two bolts arranged in the front and rear direction, from the upper side.

The outer ends of the second frame 34 in the vehicle width direction each are fastened (joined) to an upper surface of the central part 14C of a corresponding one of the side rails 14 and an upper surface of a projected part 15 (see also FIG. 2) integrally provided so as to project outward from an outer surface of the central part 14C in the vehicle width direction by fasteners, for example, three bolts in total (one for the projected part 15 and one for each of the front and rear sides of the side rail 14) from the upper side. Therefore, as shown in FIG. 3, a plurality of through-holes 34B is formed in the second frame 34, a plurality of through-holes 36B is formed in the first coupling portion 36, and a plurality of through-holes 38B is formed in the second coupling portion 38.

Here, an area between the first cross member 24 and the second cross member 26 (the front end of the second cross member 26 can be included) in the vehicle body frame 20 is an area in which, when the frame vehicle 12 drives on a rough road, a twist that occurs in the vehicle body frame 20 is extremely small. Particularly, the central part in the vehicle width direction and substantially the central part in the front and rear direction between the first cross member 24 and the second cross member 26 correspond to a "twist node" where a displacement due to a twist is zero.

In other words, the sub-frame 30 is provided in the area where a displacement due to a twist is extremely small in the vehicle body frame 20, and the first frame 32 and the second frame 34 are disposed at the "twist node". In the following description, an area (indicated by an imaginary line in FIG. 4) in substantially a rhombus shape in a plan view, obtained by connecting a central part in the front and rear direction at the central part of the first coupling portion 36 in the vehicle width direction, a central part in the front and rear direction at the central part of the second coupling portion 38 in the vehicle width direction, and the outer ends of the second frame 34 in the vehicle width direction, is referred to as "area E".

The area E is an area where a displacement is further smaller in the area where a displacement due to a twist is extremely small in the vehicle body frame 20. The fasteners, for example, bolts (through-holes 34B), that fasten the outer ends of the second frame 34 in the vehicle width direction to the projected parts 15 and the side rails 14 are located on the imaginary line that defines the area E (see FIG. 4).

The reason why the second frame 34 is placed at substantially the central part in the front and rear direction between the first cross member 24 and the second cross member 26 is because the "twist node" can slightly shifts forward or rearward from the central part in the front and rear direction between the first cross member 24 and the second cross member 26 depending on the shape of the vehicle body frame 20 and this case is included.

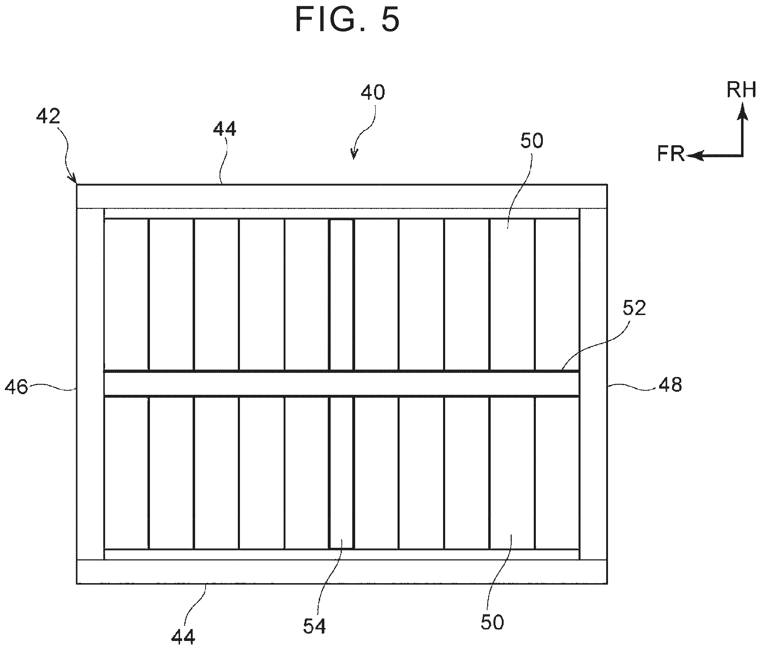

The battery pack 40 is supported by the sub-frame 30 from the lower side (in FIG. 1 and FIG. 4, the battery pack 40 is indicated by the imaginary line). More specifically, the battery pack 40 is fastened (joined) to the first frame 32, the second frame 34, the inner part of the first coupling portion 36 in the vehicle width direction, and the inner part of the second coupling portion 38 in the vehicle width direction. Here, the configuration of the battery pack 40 will be described. As shown in FIG. 5, the battery pack 40 has a rectangular box-shaped case 42 that accommodates a plurality of battery cells 50 arranged in the front and rear direction.

The case 42 has a bottom wall (not shown) with a predetermined thickness, right and left side walls 44 with a predetermined thickness, a front wall 46 and a rear wall 48 with a predetermined thickness, and a top wall (not shown) with a predetermined thickness. At least a partition plate 52 and a partition plate 54 are integrally provided upright on the bottom wall of the case 42 with a predetermined height (a height close to the top wall). The partition plate 52 serves as a partition member with a predetermined thickness and extends in the front and rear direction at the central part in the vehicle width direction to partition right and left sides from each other. The partition plate 54 serves as a partition member with a predetermined thickness and extends in the vehicle width direction at substantially the central part of the partition plate 52 in the front and rear direction. In other words, the right and left side walls 44, the front wall 46, the rear wall 48, and the partition plates 52, 54 each have stiffness to such an extent as to be capable of withstanding fastening with the fasteners, for example, bolts.

Therefore, as indicated by the solid circle marks in FIG. 1 and FIG. 4, the first frame 32 and the partition plate 52 are fastened (joined) to each other by fasteners, such as a plurality of (for example, four at predetermined intervals in the front and rear direction) bolts, and the second frame 34 and the partition plate 54 are fastened (joined) to each other by fasteners, for example, a plurality of (for example, two at predetermined intervals in the vehicle width direction) bolts.

More specifically, a front-side half of the first frame 32 on the front side with respect to the second frame 34 is fastened at two locations spaced at a predetermined interval in the front and rear direction, and a rear-side half of the first frame 32 on the rear side with respect to the second frame 34 is fastened at two locations spaced at a predetermined interval in the front and rear direction. An inner part of the second frame 34 in the vehicle width direction is fastened at two locations spaced at a predetermined interval in the vehicle width direction.

An inner part of the first coupling portion 36 in the vehicle width direction, linearly formed in the vehicle width direction, and the front wall 46 are fastened (joined) to each other by fasteners, for example, a plurality of (for example, two at predetermined intervals in the vehicle width direction) bolts, and an inner part of the second coupling portion 38 in the vehicle width direction, linearly formed in the vehicle width direction, and the rear wall 48 are fastened (joined) to each other by fasteners, for example, a plurality of (for example, two at a predetermined interval in the vehicle width direction) bolts.

The outer ends of the second frame 34 in the vehicle width direction (inner parts in the vehicle width direction with respect to the parts fastened to the side rails 14) and the right and left side walls 44 are respectively fastened (joined) to each other by fasteners, for example, a plurality of (for example, three at predetermined intervals in the front and rear direction) bolts. Therefore, as shown in FIG. 3, a plurality of through-holes 32A is formed in the first frame 32, a plurality of through-holes 34A is formed in the second frame 34, a plurality of through-holes 36A is formed in the first coupling portion 36, and a plurality of through-holes 38A is formed in the second coupling portion 38.

Next, the operation of the thus configured battery mounting structure 10 in the frame vehicle 12 according to the present embodiment will be described.

As described above, the sub-frame 30 including the first frame 32 extending in the front and rear direction at the central part of the vehicle body frame 20 in the vehicle width direction and the second frame 34 extending in the vehicle width direction at the central part of the first frame 32 in the front and rear direction is provided between the first cross member 24 and the second cross member 26 of the vehicle body frame 20. The battery pack 40 is supported by the sub-frame 30 from the lower side.

Here, a space between the first cross member 24 and the second cross member 26 of the vehicle body frame 20 is an area where a displacement due to a twist is extremely small. Therefore, when the sub-frame 30 is provided in the area and the battery pack 40 is supported by the sub-frame 30, a twist of the battery pack 40 is reduced even when the vehicle body frame 20 performs tramping to twist while, for example, the frame vehicle 12 is driving on a rough road, so it is possible to reduce concerns about breakage of the battery pack 40.

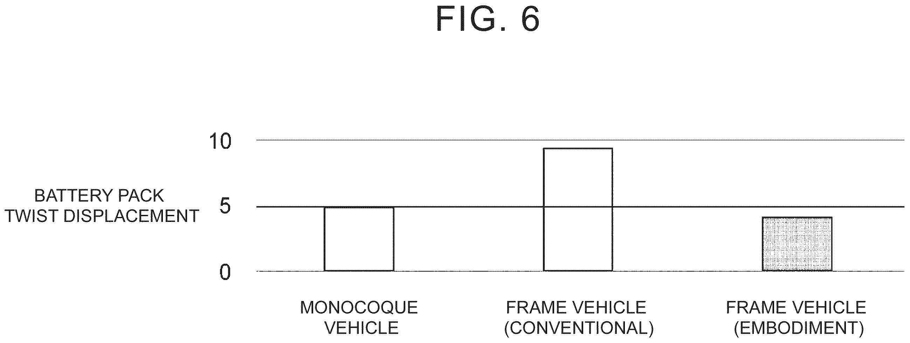

FIG. 6 is a graph that shows comparison among twist displacements applied to the battery pack 40. The "twist displacement" shows the ratio of a distance along the up and down direction between the highest part and the lowest part in a case where the front end and the rear end of the case 42 rotate in mutually opposite directions (that is, twist) in a front view or a back view about an imaginary central axis extending in the front and rear direction at the central part in the vehicle width direction and the central part in the height direction of the battery pack 40 where a monocoque vehicle is "5". As shown in FIG. 6, a twist displacement applied to the battery pack 40 supported by the battery mounting structure 10 according to the present embodiment is smaller than that in a case of the monocoque vehicle that is generally difficult to twist (smaller in twist displacement) than a frame vehicle (conventional one).

In this way, with the battery mounting structure 10 according to the present embodiment, it is possible to ensure steering stability and also protect the battery pack 40 while the frame vehicle 12 is driving on a rough road. Moreover, with the battery mounting structure 10 according to the present embodiment, the sub-frame 30 just needs to be provided in the area (twist node) where a displacement due to a twist is extremely small in the vehicle body frame 20. Therefore, an enormous weight increase and an increase in manufacturing cost are also suppressed, so a reduction in weight and a reduction in cost are also achieved in the frame vehicle 12.

The sub-frame 30 includes the first coupling portion 36 provided at the front end of the first frame 32 and extending in the vehicle width direction and the second coupling portion 38 provided at the rear end of the first frame 32 and extending in the vehicle width direction. The outer ends of the first coupling portion 36 in the vehicle width direction and the outer ends of the second frame 34 in the vehicle width direction are respectively fastened (joined) to the side rails 14 (including the flanges 14D and the projected parts 15), and the outer ends of the second coupling portion 38 in the vehicle width direction are fastened (joined) to the second cross member 26. Therefore, with the sub-frame 30, the battery pack 40 that is a heavy load can be stably supported.

The battery pack 40 is fastened (joined) to the first frame 32, the second frame 34, the inner part of the first coupling portion 36 in the vehicle width direction, and the inner part of the second coupling portion 38 in the vehicle width direction (see the solid circle marks in FIG. 4). Here, fastening portions (joint portions) of the battery pack 40 with the first frame 32, the second frame 34, the inner part of the first coupling portion 36 in the vehicle width direction, and the inner part of the second coupling portion 38 in the vehicle width direction are portions in the area where a displacement due to a twist is extremely small.

Particularly, the first frame 32 and the second frame 34 are located at the "twist node", and the fastening portions (joint portions) of the battery pack 40 with the first frame 32 and the second frame 34 are located in the area E where a displacement is further smaller in the area where a displacement due to a twist is extremely small. Therefore, even when the vehicle body frame 20 twists while, for example, the frame vehicle 12 is driving on a rough road, it is possible to further reduce concerns about breakage of the battery pack 40, so protection performance for the battery pack 40 is improved.

The sub-frame 30 is provided on the upper side of the vehicle body frame 20. Therefore, the battery pack 40 can be significantly spaced apart from a road surface, so protection performance for the battery pack 40 is improved. The first frame 32 is higher in stiffness than the second frame 34. Therefore, even when the vehicle body frame 20 twists while, for example, the frame vehicle 12 is driving on a rough road, movement like a wave of the battery cells 50 accommodated so as to be arranged in the front and rear direction in the battery pack 40 (case 42) is reduced.

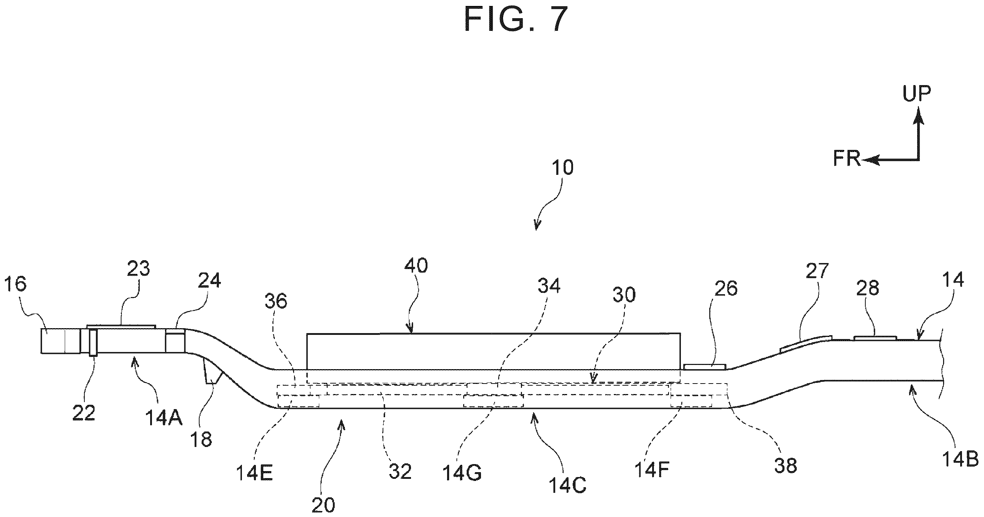

The operation of the battery mounting structure 10 according to the present embodiment is as described above. Alternatively, the sub-frame 30 may be provided at an intermediate part of the vehicle body frame 20 in the up and down direction as in the case of a first modification shown in FIG. 7. More specifically, each of the outer ends of the first coupling portion 36 in the vehicle width direction is fastened (joined) from the upper side to a flange 14E projecting inward in the vehicle width direction from the intermediate part in the up and down direction of an inner surface, facing inward in the vehicle width direction, of the front part 14A of a corresponding one of the side rails 14 by fasteners, for example, two bolts.

Similarly, each of the outer ends of the second coupling portion 38 in the vehicle width direction is fastened (joined) from the upper side to a flange 14F projecting inward in the vehicle width direction from the intermediate part in the up and down direction of an inner surface, facing inward in the vehicle width direction, of the rear part 14B of a corresponding one of the side rails 14 by fasteners, for example, two bolts. Each of the outer ends of the second frame 34 in the vehicle width direction is fastened (joined) from the upper side to a flange 14G projecting inward in the vehicle width direction from the intermediate part in the up and down direction of an inner surface, facing inward in the vehicle width direction, of the central part 14C of a corresponding one of the side rails 14 by fasteners, for example, three bolts.

Thus, in a side view, the sub-frame 30 does not project toward the upper side or the lower side beyond the vehicle body frame 20 (side rail 14) and is disposed on the inner side of the vehicle body frame 20. Therefore, a larger space can be taken in the up and down direction on the vehicle cabin side as compared to the case of the above-described embodiment by the amount by which the sub-frame 30 (battery pack 40) is moved to the lower side. Although the sub-frame 30 is moved to the lower side as compared to the case of the above-described embodiment, the battery pack 40 can be spaced apart from a road surface, so protection performance for the battery pack 40 is improved.

Although not shown in the drawing, when the second cross member 26 is formed in a closed cross-sectional shape, each of the outer ends of the second coupling portion 38 in the vehicle width direction may be fastened (joined) from the lower side to a corresponding one of the outer ends of a lower surface of the second cross member 26 in the vehicle width direction by fasteners, for example, two bolts. At this time, when the level of the lower surface of the second cross member 26 is not an appropriate level, the level of the second cross member 26 may be changed as needed.

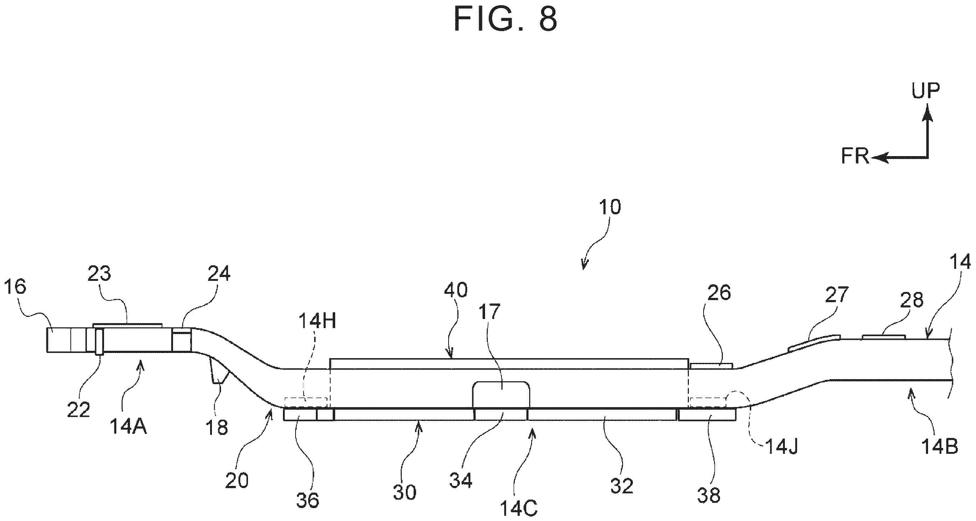

The sub-frame 30 may be provided on the lower side of the vehicle body frame 20 as in the case of a second modification shown in FIG. 8. More specifically, each of the outer ends of the first coupling portion 36 in the vehicle width direction is fastened (joined) from the lower side to a lower surface of the front part 14A of a corresponding one of the side rails 14 and a flange 14H projecting inward in the vehicle width direction from the lower surface by fasteners, for example, two bolts in total.

Each of the outer ends of the second coupling portion 38 in the vehicle width direction is fastened (joined) from the lower side to a flange 14J projecting inward in the vehicle width direction from a lower surface of the rear part 14B of a corresponding one of the side rails 14 by fasteners, for example, two bolts in total. Each of the outer ends of the second frame 34 in the vehicle width direction is fastened (joined) from the lower side to a lower surface of the central part 14C of a corresponding one of the side rails 14 and a lower surface of a projected part 17 formed upside down from the projected part 15, by fasteners, for example, three bolts in total.

Thus, in a side view, the sub-frame 30 is disposed on the lower side of the vehicle body frame 20 (side rails 14), so the battery pack 40 is disposed on the inner side of the vehicle body frame 20. In other words, in a side view, the battery pack 40 (case 42) at least partially overlaps the vehicle body frame 20 in the height direction, and the right and left side walls 44, the front wall 46, and the rear wall 48 of the battery pack 40 (case 42) are at least partially surrounded by the vehicle body frame 20 in the height direction.

Therefore, it is possible to improve mounting stability of the battery pack 40, and it is also possible to improve protection performance for the battery pack 40 in the event of a collision of the frame vehicle 12. In other words, even when a collision load is input to the frame vehicle 12 in the front and rear direction or in the vehicle width direction, it is possible to further effectively protect the battery pack 40 from the collision load.

Although not shown in the drawing as in the case of the above, when the second cross member 26 is formed in a closed cross-sectional shape, each of the outer ends of the second coupling portion 38 in the vehicle width direction may be fastened (joined) from the lower side to a corresponding one of the outer ends of a lower surface of the second cross member 26 in the vehicle width direction by fasteners, for example, two bolts. At this time, when the level of the lower surface of the second cross member 26 is not an appropriate level, the level of the second cross member 26 may be changed as needed.

The sub-frame 30 is not limited to the one formed such that the first frame 32, the second frame 34, the first coupling portion 36, and the second coupling portion 38 are integrally joined to one another by welding or the like. Of the first frame 32, the second frame 34, the first coupling portion 36, and the second coupling portion 38, at least the first frame 32 and the second frame 34 may be integrally formed. With this configuration, in comparison with a case where the first frame 32 and the second frame 34 are not integrally formed, formability (dimensional accuracy) of the sub-frame 30 is improved, and the number of components can be reduced.

The battery mounting structure 10 of the frame vehicle 12 according to the present embodiment has been described with reference to the drawings; however, the battery mounting structure 10 of the frame vehicle 12 according to the present embodiment is not limited to those shown in the drawings. The battery mounting structure 10 of the frame vehicle 12 according to the present embodiment may be changed in design without departing from the scope of the invention. For example, in the sub-frame 30, the first frame 32 and the second frame 34 may be integrally formed by fastening, bonding, or the like, or the first frame 32 and both the first coupling portion 36 and the second coupling portion 38 may be integrally formed by fastening, bonding, or the like.

Although not shown in the drawing, the battery pack 40 may be fastened (joined) so as to be suspended from the sub-frame 30. In this case, the partition plates 52, 54 may be integrally suspended at a predetermined level (a level close to the bottom wall) from the top wall of the case 42. In this case, an under cover with higher strength than usual is preferably provided on the lower side of the battery pack 40 from the viewpoint of protecting the battery pack 40.

## Claims

1. A battery mounting structure (10) in a frame vehicle (12), the battery mounting structure (10) comprising:
a vehicle body frame (20) including a pair of right and left side rails (14) extending in a vehicle front and rear direction, a first cross member (24) coupling vehicle front-side parts of the side rails (14) to each other in a vehicle width direction, and a second cross member (26) coupling vehicle rear-side parts of the side rails (14) to each other in the vehicle width direction;
a sub-frame (30) including a first frame (32) extending in the vehicle front and rear direction at a central part of the vehicle body frame (20) in the vehicle width direction and a second frame (34) extending in the vehicle width direction at a central part of the first frame (32) in the vehicle front and rear direction, the sub-frame (30) being provided between the first cross member (24) and the second cross member (26); and
a battery pack (40) supported on the sub-frame (30) from a vehicle lower side.

2. The battery mounting structure (10) according to claim 1, wherein:
the sub-frame (30) includes
a first coupling portion (36) provided at a vehicle front-side end of the first frame (32) and extending in the vehicle width direction, and
a second coupling portion (38) provided at a vehicle rear-side end of the first frame (32) and extending in the vehicle width direction; and
outer ends of the first coupling portion (36) in the vehicle width direction and outer ends of the second frame (34) in the vehicle width direction are joined to the side rails (14), and outer ends of the second coupling portion (38) in the vehicle width direction are joined to the second cross member (26).

3. The battery mounting structure (10) according to claim 2, wherein the battery pack (40) is joined to the first frame (32), the second frame (34), an inner part of the first coupling portion (36) in the vehicle width direction, and an inner part of the second coupling portion (38) in the vehicle width direction.

4. The battery mounting structure (10) according to claim 3, wherein the sub-frame (30) is provided on a vehicle upper side of the vehicle body frame (20).

5. The battery mounting structure (10) according to claim 3, wherein the sub-frame (30) is provided at an intermediate part of the vehicle body frame (20) in a vehicle up and down direction.

6. The battery mounting structure (10) according to claim 3, wherein the sub-frame (30) is provided on a vehicle lower side of the vehicle body frame (20).

7. The battery mounting structure (10) according to any one of claims 1 to 6, wherein the first frame (32) is higher in stiffness than the second frame (34).

8. The battery mounting structure (10) according to any one of claims 2 to 6, wherein at least the first frame (32) and the second frame (34) of the sub-frame (30) are integrally formed.
